# EUROPEAN PATENT SPECIFICATION

(11) **EP 0 580 432 B1**
(45) Date of publication and mention of the grant of the patent: **24.09.1997**
(21) Application number: 93305769.7
(22) Date of filing: 22.07.1993
(51) Int. Cl.: H04Q 7/32, H04B 7/26, H04M 1/72

(54) **Mobile communication terminal device and method of preventing improper rewriting of information**
Mobiles Kommunikationsendgerät und Verfahren zum Verhindern von illegalem Überschreiben von Information
Terminal mobile de communication et méthode pour empêcher une ré-écriture illégale d'information

(30) Priority: 24.07.1992 JP 197983/92
(43) Date of publication of application: 26.01.1994
(73) Proprietor: NEC CORPORATION, Tokyo (JP)
(72) Inventor: Namiki, Hideo, c/o NEC Corporation, Tokyo (JP); Komoda, Motoyoshi, c/o NEC Corporation, Tokyo (JP)
(74) Representative: Moir, Michael Christopher

(56) References cited:
- WO-A-91/09484
- FR-A- 2 645 303
- PATENT ABSTRACTS OF JAPAN vol. 15, no. 284 (E-1091)18 July 1991 & JP-A-03 099 532 (FUJITSU LTD.) 24 April 1991

## Description

### BACKGROUND OF THE INVENTION

### 1. Field of the Invention

The present invention relates to a mobile communication terminal system, and more specifically to a mobile communication terminal device such as that in portable telephone sets and mobile phones capable of preventing pieces of information such as serial numbers each for use in charging control of subscribers and so on from being improperly or otherwise incorrectly rewritten and to a method of preventing information from being improperly or incorrectly rewritten.

### 2. Description of the Prior Art

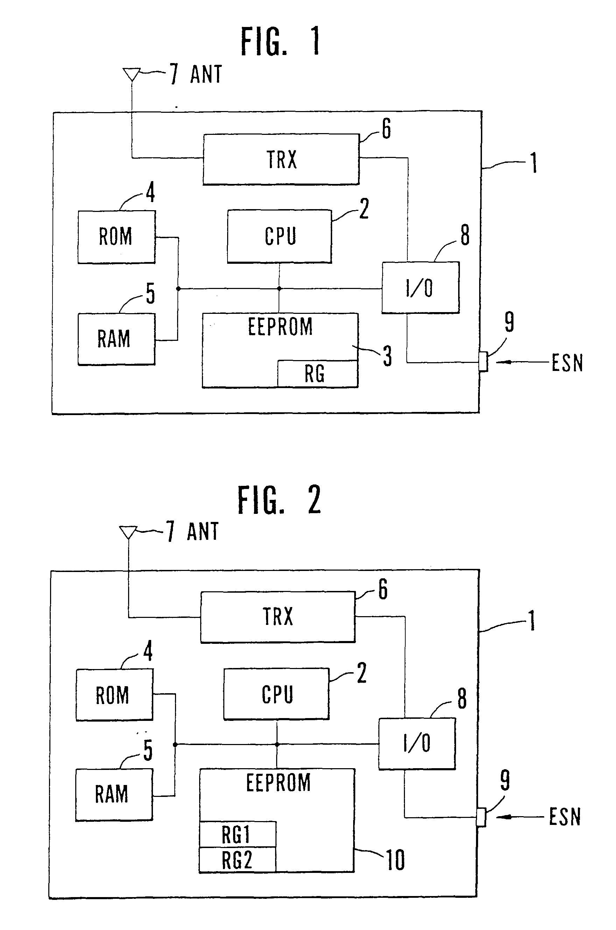

Referring to FIG.1, a prior art mobile communication terminal device is illustrated which comprises a CPU 2, an EEPROM 3 as a ROM capable of electrical writing/erasing, a ROM 4, a RAM 5, a TRX as a transmitter/receiver section, an antenna 7, an interface (I/O) 8, and an I/O connector 9. Herein, upon writing in a storage region RG in the EEPROM 3 a serial number (hereinafter, referred to as ESN) for use in charging control and so on, the CPU 2 receives and analyzes ESN data fed through the I/O connector 9 and the interface 8, and thereafter writes the same in the storage region RG.

When the mobile communication terminal device 1 makes a call, the ESN is sent to a base station as data together with a MIN (Mobile Indentification Number) as a subscriber's number. In the base station, it is judged on the basis of the received data whether coincidence is attained or not between the combination of the ESN and the MIN and a previously registered corresponding combination, and if so a subscriber identified by that number is charged. In this case, if any information concerning a subscriber's ESN and MIN could improperly be obtained and his ESN and MIN could be written in another person's mobile communication terminal 1, the original subscriber would be wrongly charged. The MIN has to be rewritten after shipping, but the ESN, which is the number inherent in and particularly to the device, does not need to be rewritten after it is once written upon shipping. Further the ESN has no limitation to its writing, and hence it is rewritable with ease once the method of its writing is known.

Such a prior art mobile communication terminal device therefore has a difficulty that an ESN written in an EEPROM may be rewritten with ease by investigating a storage address of the ESN in the EEPROM and rewriting that data.

JP-A-03.099.532 discloses a method of preventing illicit use of a cellular mobile communication terminal in which the ESN is duplicated in a second ROM. In operation, the two ESNs are compared. If they coincide, the terminal performs the normal processing. If they are different, the terminal is disabled.

### SUMMARY OF THE INVENTION

To solve the difficulty with the prior art, it is a first object of the present invention to provide a mobile communication terminal device wherein effective use of the device is frustrated if information inherent to the device such as the ESN is rewritten. In such circumstances, the result is that unauthorised or improper rewriting of the inherent information is prevented by rendering it nugatory.

It is a second object of the present invention to provide in a mobile communication terminal device a method of preventing or otherwise frustrating incorrect rewriting of information inherent to the device.

To achieve the above objects, in one aspect the invention provides a mobile communication terminal device comprising an electrically writable/erasable memory having a first storing area and a second storing area for storing information particular to the device, characterised in that said information is stored in said first storing area in an encoded form and in said second storing area in a non-encoded form, said memory further having a third storing area for storing data, inherent to the encoded information, in either a first state in which the rewriting of both the information in said second storing area and the data in said third storing area is permanently prohibited and a second state in which such rewriting is allowed; said device further comprising means for permanently disabling rewriting of said information in said first and second storing area and of said data in said third storing area if said data is in said first state; means for decoding the stored encoded information; means for comparing the decoded information with the stored non-encoded information prior to energising the device; and means for disabling effective operation of the device if the non-encoded information is not identical with the decoded information.

The invention also provides a method of preventing information inherent in a mobile communication device from being incorrectly rewritten, said method being characterised by comprising the steps of storing said information in an electrically writable/erasable memory both in an encoded form and in a non-encoded form; storing data, inherent to the encoded information, in either a first state in which the rewriting of both the information in said second storing area and the data in said third storing area is permanently prohibited and a second state in which such rewriting is allowed; permanently disabling rewriting of said information in said first and second storing area and said of said data in said third storing area if said data is in said first state; decoding said encoded stored information prior to initiation of speech operation after power is supplied to the device and comparing the decoded information with said stored non-encoded information; and disabling the speech operation if the non-encoded information is not coincident with the decoded information.

The above and other objects, features and advantages of the present invention will become more apparent from the following description when taken in conjunction with the accompanying drawings in which preferred embodiments of the present invention are shown by way of illustrative examples.

### BRIEF DESCRIPTION OF THE DRAWINGS

FIG.1 is a block diagram schematically illustrating a prior art mobile communication terminal device;
FIG.2 is a block diagram schematically illustrating a mobile communication terminal device according to the present invention;
FIG.3 is a flow chart illustrating a method of preventing incorrect rewriting according to the present invention; and
FIG.4 is a flow chart illustrating writing of a serial number (ESN) in the present invention.

### DETAILED DESCRIPTION OF PREFERRED EMBODIMENT

In what follows, an embodiment of the present invention will be described with reference to the accompanying drawings.

Referring to FIG.2, there is provided a block diagram illustrating a mobile communication terminal device as an embodiment of the present invention. In FIG.2, symbols identical to those of the prior art example illustrated in FIG.2 have the same functions. In the present embodiment, an EEPROM 10 includes two storage areas: a RG1 for storing an ESN(E) after encoded and a RG2 for storing an ordinary ESN(D) before encoded.

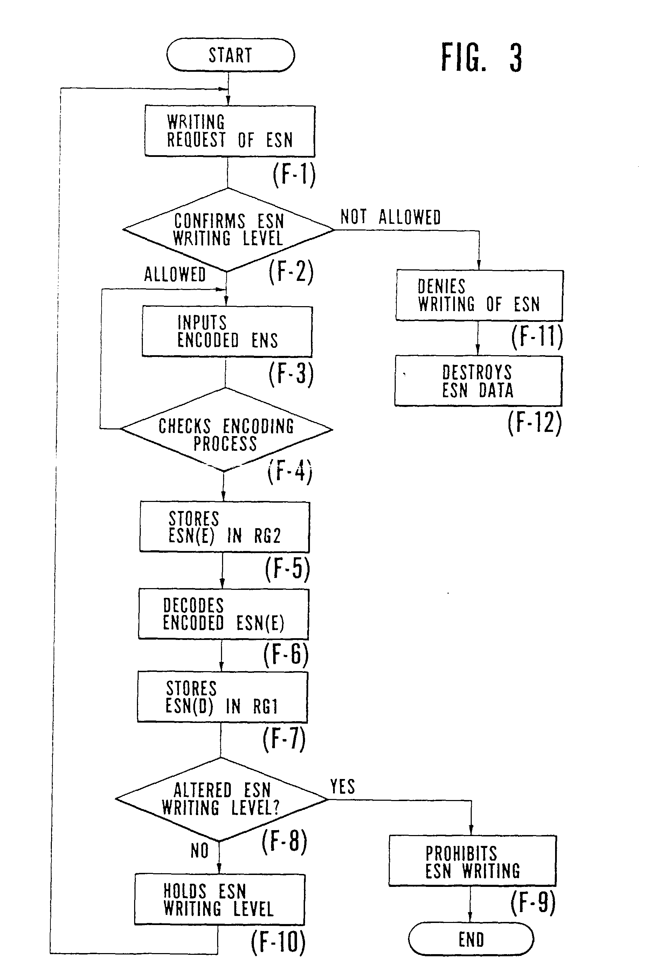

Referring to FIG.3, there is illustrated a method of writing ESN data according to the present invention.

With a writing request upon shipping in step F-1, a CPU 2 confirms an ESN writing level in step F-2. If the writing is allowed, then the ESN(E) encoded in conformity with a predetermined encoding format is inputted through an I/O connector 9 in step F-3. The CPU 2 reads the encoding format and a check code both stored in the ROM 4, and checks that the encoded ESN(E) inputted through the I/O connector 9 is correctly encoded in step F-4. If it is correct, then the encoded ESN(E) is written in the storage region RG2 of the EEPROM 10 in step F-5. Thereafter, the encoded ESN(E) is decoded in step F-6, and an ordinary ESN(D) so decoded is written in the storage region RG1 of the EEPROM 10 in step F-7. Although a writing level of such an ESN in general should not be altered after the inherent ESN is written in the EEPROM 10 because rewriting thereafter should be prohibited, there is sometimes a need for the ESN to be rewritten owing to unexpected alteration of the destination of shipping. For this, it is investigated whether or not the writing level of the ESN has been altered in step F-8. If it has been altered, then writing of ESNs thereafter becomes a prohibition state in step F-9. Unless the the writing level of the ESN is altered, then the present ESN writing level is held for the purpose of writing of ESNs thereafter in step F-10. The writing prohibition state or the holding of a writing level, ie. a writing permission state is stored in a storage region of the EEPROM 10 not illustrated (different from the storage regions RG1 and RG2). If it is now later attempted to re-write the ESN, then a writing request of the ESN is existent as in the step F-1. The CPU 2 successively confirms the writing level of the ESN as in the step F-2. As a result, since the writing of the ESN has been prohibited in step F-9, (the ESN writing level having been altered in the step F-8), the writing of the new ESN, is denied in step F-11 and the ESN already written is destroyed in step F-12 to disable the mobile communication terminal device 1. Hereby, incorrect rewriting of the ESN after shipping is prevented.

Any mobile communication terminal device once prohibited as such in writing thereinto is impossible to be altered without replacing the EEPROM for a new one.

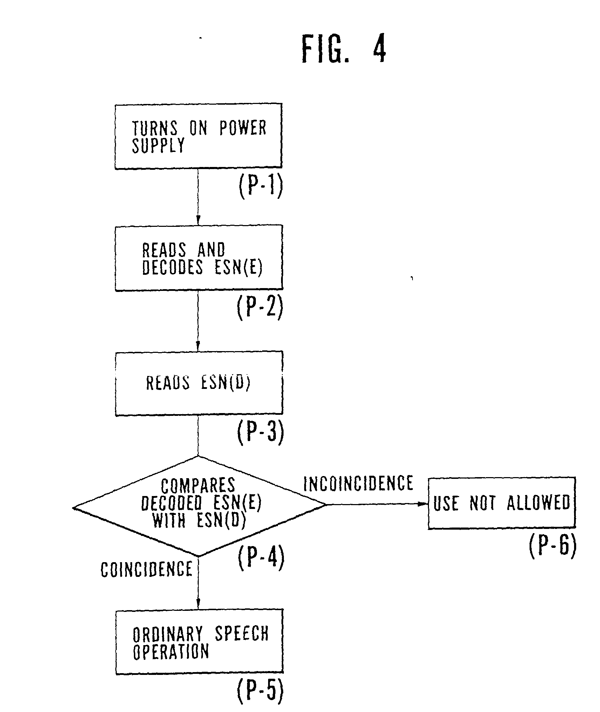

Referring to FIG. 4, there is illustrated a method of preventing incorrect charging according to the present invention.

With a power supply turned on by a subscriber upon the use of the mobile communication terminal device 1, the CPU2 reads and decodes the encoded ESN(E) stored in the storage region RG2 of the EEPROM 10 in step P-2, and further reads the decoded ESN(D) from the storage region RG1 of the EEPROM 10 in step P-3, for comparison therebetween in step P-4. As a result, if both are coincident, then the operation advances ordinary speech operation in step P-5, but if they are not coincident, then the operation is directed to displaying the prohibition and the device is disabled in step P-6.

The comparison in the step P-4 detects non-coincidence if the ESN has been improperly rewritten, and hence chargeable use of the device is prevented, and no incorrect charge is billed to the original subscriber's account.

According to the present invention, as described above, an ESN is doubly stored in the EEPROM, and both are compared upon power supply being turned on, so that even though an incorrect user rewrites one thereof, the mobile communication terminal device is prevented from being incorrectly used owing to incorrect rewriting of the ESN. Further, since one of the ESNs doubly stored is encoded, both ESNs are unlikely to be rewritten simultaneously, thus safeguarding against incorrect use of the ESN.

## Claims

1. A mobile communication terminal device comprising;
an electrically writable/erasable memory (10) having a first storing area (RG2) and a second storing area (RG1) for storing information particular to the device,
characterised in that said information is stored in said first storing area in an encoded form and in said second storing area in a non-encoded form, said memory further having a third storing area for storing data, inherent to the encoded information, in either a first state in which the rewriting of both the information in said second storing area and the data in said third storing area is permanently prohibited and a second state in which such rewriting is allowed;
said device further comprising:
means for permanently disabling rewriting of said information in said first and second storing area and of said data in said third storing area if said data is in said first state;
means for decoding the stored encoded information;
means for comparing the decoded information with the stored non-encoded information prior to energising the device; and
means for disabling effective operation of the device if the non-encoded information is not identical with the decoded information.

2. The mobile communication terminal device according to Claim 1, wherein the information is a serial number of the device.

3. A method of preventing information inherent in a mobile communication device from being incorrectly rewritten, said method being characterised by comprising the steps of:
storing said information in an electrically writable/erasable memory (10) both in an encoded form and in a non-encoded form;
storing data, inherent to the encoded information, in either a first state in which the rewriting of both the information in said second storing area and the data in said third storing area is permanently prohibited and a second state in which such rewriting is allowed;
permanently disabling rewriting of said information in said first and second storing area and said of said data in said third storing area if said data is in said first state;
decoding said encoded stored information prior to initiation of speech operation after power is supplied to the device and comparing the decoded information with said stored non-encoded information; and
disabling the speech operation if the non-encoded information is not coincident with the decoded information.

4. A method according to Claim 3, wherein said stored information is a serial number of said mobile transmission terminal device.

5. A method according to Claim 3 or Claim 4, wherein said comparison between said decoded information and said non-encoded information is performed upon power being supplied to the device.

## Patentansprüche

1. Mobiles Kommunikationsendgerät, das aufweist:
einen elektrisch beschreibbaren/löschbaren Speicher (10) mit einem ersten Speicherbereich (RG2) und einem zweiten Speicherbereich (RG1) zum Speichern von Information, die für das Gerät typisch ist,
dadurch gekennzeichnet, daß die Information in dem ersten Speicherbereich in codierter Form und in dem zweiten Speicherbereich in nicht-codierter Form gespeichert ist, wobei der Speicher weiter einen dritten Speicherbereich zum Speichern von Daten, die der codierten Information eigen sind, in entweder einem ersten Zustand, in dem das erneute Schreiben sowohl der Information im zweiten Speicherbereich als auch der Daten im dritten Speicherbereich dauernd verboten ist, und einem zweiten Zustand, in dem das erneute Schreiben erlaubt ist, aufweist;
welches Gerät weiter aufweist:
Mittel zum dauernden Sperren des erneuten Schreibens der Information in den ersten und zweiten Speicherbereich und der Daten in den dritten Speicherbereich, wenn die Daten in dem ersten Zustand sind;
Mittel zum Decodieren der gespeicherten codierten Information;
Mittel zum Vergleichen der decodierten Information mit der gespeicherten nicht-codierten Information vor dem Aktivieren des Geräts; und
Mittel zum Sperren wirksamen Betriebs des Geräts, wenn die nicht-codierte Information nicht identisch ist mit der decodierten Information.

2. Mobiles Kommunikationsendgerät nach Anspruch 1, dadurch gekennzeichnet, daß die Information die Seriennummer des Geräts ist.

3. Verfahren zum Verhindern, daß Information, die einem mobilen Kommunikationsgerät eigen ist, unrichtig erneut geschrieben wird, welches Verfahren dadurch gekennzeichnet ist, daß es die Schritte aufweist:
Information in einem elektrisch beschreibbaren/löschbaren Speicher (10) sowohl in codierter Form als auch in nicht-codierter Form zu speichern;
Daten, die der codierten Information eigen sind, entweder in einem ersten Zustand, in dem das erneute Schreiben sowohl der Information im zweiten Speicherbereich als auch der Daten im dritten Speicherbereich dauernd verboten ist, und in einem zweiten Zustand, in dem das erneute Schreiben erlaubt ist, zu speichern;
dauernd das erneute Schreiben der Information in dem ersten und zweiten Speicherbereich und der Daten im dritten Speicherbereich zu sperren, wenn die Daten sich im ersten Zustand befinden;
die codierte gespeicherte Information vor dem Beginn des Sprechbetriebes, nachdem dem Gerät Strom zugeführt ist, zu decodieren und die decodierte Information mit der gespeicherten nicht-codierten Information zu vergleichen; und
den Sprechbetrieb zu sperren, wenn die nicht-codierte Information nicht mit der decodierten Information übereinstimmt.

4. Verfahren nach Anspruch 3, bei dem die gespeicherte Information eine Seriennummer des mobilen Übertragungsendgeräts ist.

5. Verfahren nach Anspruch 3 oder 4, bei dem der Vergleich zwischen der decodierten Information und der nicht-codierten Information dann durchgeführt wird, wenn dem Gerät Strom zugeführt wird.

## Revendications

1. Dispositif terminal mobile de communication comprenant :
une mémoire à écriture et à effacement électriques (10) comportant une première zone de mémorisation (RG2) et une seconde zone de mémorisation (RG1) pour mémoriser une information particulière au dispositif,
caractérisé en ce que ladite information est mémorisée dans ladite première zone de mémorisation sous une forme codée et dans ladite seconde zone de mémorisation sous une forme non codée, ladite mémoire comportant en outre une troisième zone de mémorisation pour mémoriser des données, inhérentes à l'information codée, soit dans un premier état dans lequel la réécriture à la fois de l'information dans ladite seconde zone de mémorisation et des données dans ladite troisième zone de mémorisation est empêchée de façon permanente soit dans un second état dans lequel une telle réécriture est autorisée ;
ledit dispositif comprenant en outre :
des moyens pour empêcher de façon permanente une réécriture de ladite information dans lesdites première et seconde zones de mémorisation et desdites données dans ladite troisième zone de mémorisation si lesdites données sont dans ledit premier état ;
des moyens pour décoder ladite information codée mémorisée ;
des moyens pour comparer l'information décodée avec l'information non codée mémorisée avant la mise sous tension du dispositif ; et
des moyens pour empêcher une opération effective du dispositif si l'information non codée n'est pas identique à l'information décodée.

2. Dispositif terminal mobile de communication selon la revendication 1, dans lequel l'information est un numéro d'ordre du dispositif.

3. Méthode pour empêcher une information inhérente à un dispositif mobile de communication d'être réécrite de façon incorrecte, ladite méthode étant caractérisée par les étapes consistant à :
mémoriser ladite information dans une mémoire à écriture et à effacement électriques (10) à la fois sous une forme codée et sous une forme non codée ;
mémoriser des données, inhérentes à l'information codée, soit dans un premier état dans lequel la réécriture à la fois de l'information dans ladite seconde zone de mémorisation et les données dans ladite troisième zone de mémorisation est empêchée de façon permanente soit dans un second état dans lequel une telle réécriture est autorisée ;
empêcher de façon permanente une réécriture de ladite information dans lesdites première et seconde zones de mémorisation et desdites données dans ladite troisième zone de mémorisation si lesdites données sont dans ledit premier état ;
décoder ladite information codée mémorisée avant le lancement de l'opération vocale après alimentation du dispositif et comparer l'information décodée avec ladite information non codée mémorisée ; et
empêcher l'opération vocale si l'information non codée ne coïncide pas avec l'information décodée.

4. Méthode selon la revendication 3, dans laquelle ladite information mémorisée est un numéro d'ordre dudit dispositif terminal mobile de transmission.

5. Méthode selon la revendication 3 ou la revendication 4, dans laquelle ladite comparaison entre ladite information décodée et ladite information non codée est effectuée lors de l'alimentation du dispositif.
